# EUROPÄISCHE PATENTSCHRIFT

(11) **EP 1 196 469 B1**
(45) Veröffentlichungstag und Bekanntmachung des Hinweises auf die Patenterteilung: **29.10.2003**
(21) Anmeldenummer: 00943797.1
(22) Anmeldetag: 13.06.2000
(51) Int. Cl.: C08G 18/00

(54) **SPEZIELLE AMINOSILANE ENTHALTENDE, KONDENSATIONSVERNETZENDE POLYURETHANMASSEN, EIN VERFAHREN ZU IHRER HERSTELLUNG SOWIE IHRE VERWENDUNG**
CONDENSATION CROSS-LINKING POLYURETHANE MATERIALS CONTAINING SPECIAL AMINOSILANES, A METHOD FOR THE PRODUCTION THEREOF AND THEIR USE
MATIERES POLYURETHANE A RETICULATION PAR CONDENSATION CONTENANT DES AMINOSILANES SPECIAUX, PROCEDE PERMETTANT DE LES PREPARER ET LEUR UTILISATION

(30) Priorität: 25.06.1999 DE 19929011; 25.06.1999 DE 19929029
(43) Veröffentlichungstag der Anmeldung: 17.04.2002
(73) Patentinhaber: Bayer Aktiengesellschaft, 51368 Leverkusen (DE)
(72) Erfinder: WALTER, Ulrich, /// (DE); SCHMALSTIEG, Lutz, D-50676 Köln (DE); LEMMERZ, Ralf, D-51375 Leverkusen (DE); WILMES, Oswald, D-51061 Köln (DE)
(86) Internationale Anmeldenummer: EP0005392
(87) Internationale Veröffentlichungsnummer: WO01000700

(56) Entgegenhaltungen:
- EP-A- 0 596 360
- EP-A- 0 807 649
- EP-A- 0 831 108
- EP-A- 0 864 575
- EP-A- 0 994 138

## Beschreibung

Die Erfindung betrifft über eine Silanpolykondensation vernetzende Polyurethanmassen, enthaltend mindestens ein alkoxysilanfunktionelles Polyurethan, mindestens einen basischen Füllstoff, mindestens ein Umsetzungsprodukt eines Aminosilans mit einem Malein- oder Fumarsäureester, mindestens eine metallorganische Verbindung und ggf. weitere Hilfsstoffe, ein Verfahren zu deren Herstellung sowie deren Verwendung.

Alkoxysilanfunktionelle Polyurethane, die über eine Silanpolykondensation vernetzen, gehören zum lange bekannten Stand der Technik. Ein Übersichtsartikel zur Thematik findet sich in "Adhesives Age" 4/1995, Seite 30 ff. (Autoren: Ta-Min Feng, B. A. Waldmann). Derartige Alkoxysilan-terminierte, feuchtigkeitshärtende Einkomponenten-Polyurethane werden in zunehmendem Maße als weichelastische Beschichtungs-, Dichtungs- und Klebemassen im Bauwesen und in der Automobilindustrie verwendet. Bei diesen Anwendungen werden hohe Anforderungen an das Dehn-, Adhäsionsvermögen und an die Aushärtegeschwindigkeit gestellt.

Beispielhaft werden derartige Produkte beschrieben in der EP-A-596360, EP-A 831108, der EP-A 807649 oder der EP-A 676403. Bei der Formulierung derartiger Systeme werden typischerweise metallorganische Katalysatoren sowie Haftvermittler vom Aminosilan-Typ mitverwendet. Durch den Zusatz der Aminosilanverbindungen kann es aber oftmals zu Lagerstabilitätsproblemen kommen, insbesondere dann, wenn höhere Anteile an Aminosilanen eingesetzt werden, um eine gute Haftung auf problematischen Untergründen zu erzielen.

Aufgabe der vorliegenden Erfindung war es daher, Aminosilane enthaltende, über eine Silanpolykondensation vemetzende Polyurethanmassen bereitzustellen, die eine verbesserte Lagerstabilität aufweisen.

Diese Aufgabe konnte mit der Bereitstellung der nachstehend näher beschriebenen kondensationsvernetzenden Polyurethanmassen gelöst werden.

Gegenstand der Erfindung sind über eine Silanpolykondensation vernetzende Polyurethanmassen, enthaltend
A) mindestens ein alkoxysilanfunktionelles Polyurethan mit Endgruppen der allgemeinen Formel (I) 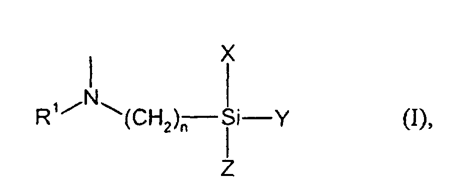 in welcher
   - R¹: für einen organischen Rest mit 1 bis 12 Kohlenstoffatomen,
   - n: für eine ganze Zahl von 2 bis 4 steht
   und
   - X,Y,Z: gleiche oder verschiedene organische Reste darstellen, mit der Maßgabe, daß mindestens einer der Reste eine Alkoxygruppe mit 1 bis 4 Kohlenstoffatomen, vorzugsweise eine Methoxy- oder Ethoxygruppe darstellt,
B) mindestens einen basischen Füllstoff,
C) mindestens ein Umsetzungsprodukt aus mindestens einem Aminosilan der allgemeinen Formel (II) 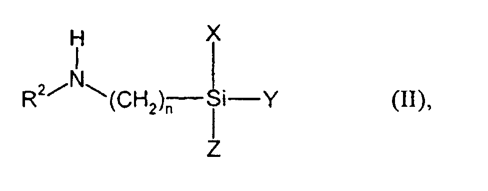 in welcher
   - R²: für ein Wasserstoffatom, oder eine Aminoethylgruppe steht und
   - n, X,Y,Z: die bei Formel (I)genannte Bedeutung haben,
   mit mindestens einem Malein- oder Fumarsäure(ester) der allgemeinen Formel (III)

   R₃OOC-CH=CH-COOR₃ (III),

   in welcher
   R₃ für eine Alkylgruppe mit 1 bis 12 Kohlenstoffatomen steht,
E) mindestens eine metallorganische Verbindung und
F) ggf. weitere Hilfsstoffe.

Der Erfindung liegt die überraschende Beobachtung zugrunde, daß die anstelle der üblicherweise als Haftvermittler eingesetzten Aminosilane erfindungsgemäß eingesetzten Addukte von Aminosilanen mit Malein- oder Fumarsäureestern verbesserte mechanische Eigenschaften und eine verbesserte Lagerstabilität bewirken.

Die erfindungsgemäß als Komponente C) einzusetzenden Umsetzungsprodukte aus Malein- bzw. Fumarsäureestern und Aminosilanen sind prinzipiell bekannt und werden beispielhaft beschrieben in der EP-A 596360 oder der EP-A 831108. Gemäß der Lehre dieser Veröffentlichungen werden die Umsetzungsprodukte von Malein- bzw. Fumarsäureestern mit Aminosilanen zur Umsetzung mit Isocyanatprepolymeren eingesetzt. Die Verwendung dieser Produkte als Additiv zur Verbesserung der mechanischen Eigenschaften und zur Verbesserung der Haftung von über Silanpolykondensation vernetzenden Polyurethanen ist bisher nicht bekannt.

Die als Komponente A) erfindungsgemäß einzusetzenden Alkoxysilan-Endgruppen aufweisenden Polyurethane sind prinzipiell bekannt und werden hergestellt durch Umsetzung langkettiger, vorzugsweise linearer NCO-Prepolymere mit aminofunktionellen Silanen der allgemeinen Strukturformel (II) 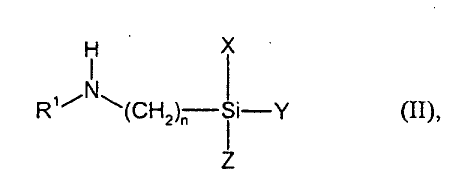 wobei R¹ für einen organischen Rest mit 1 bis 12 Kohlenstoffatomen, vorzugsweise eine Phenylgruppe oder besonders bevorzugt einen Rest der allgemeinen Sturkturformel (IIb) steht, 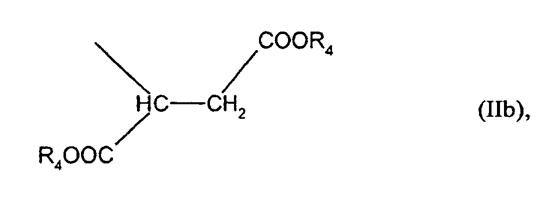 wobei R₄ eine Alkylgruppe mit 1 bis 4 Kohlenstoffatomen steht. In der obengenannten Strukturformel steht n für eine ganze Zahl von 2 bis 4, vorzugsweise 3.

X, Y, Z bedeuten in der obengenannten Strukturformel gleiche oder verschiedene organische Reste, mit der Maßgabe, daß mindestens einer der Reste eine Alkoxygruppe mit 1 bis 4 Kohlenstoffatomen darstellt. Vorzugsweise ist mindestens einer der Reste eine Methoxy- oder Ethoxygruppe. Besonders bevorzugt steht X, Y und Z für jeweils eine Methoxygruppe.

Beispiele für geeignete arninofunktionelle Silane gemäß Strukturformel (I) sind N-Methyl-3-aminopropyltrimethoxysilan, N-Methyl-3-aminopropyltriethoxysilan, N-Butyl-3-aminopropyltrimethoxysilan, Vorzugsweise einsetzbar ist N-Phenyl-3-aminopropyltrimethoxysilan. Besonders bevorzugt einsetzbar sind die in der EP-A 596360 beschriebenen Asparaginsäureester wie sie durch Umsetzung von Aminosilanen der allgemeinen Strukturformel (II) mit Malein- oder Fumarsäureestern der Formel (III) entstehen.

Zur Herstellung der Alkoxysilan-Endgruppen aufweisenden Polyurethane A) einsetzbare NCO-Prepolymere werden in bekannter Weise durch Umsetzung von Polyetherpolyolen vorzugsweise Polyetherdiolen mit Diisocyanaten hergestellt und weisen einen NCO-Gehalt zwischen 0,4 und 4 % auf.

Als basische Füllstoffe B) einsetzbar sind gefällte oder gemahlene Kreiden, Metalloxide, -sulfate, -silicate, -hydroxyde, -carbonate und -hydrogencarbonate. Weitere Füllstoffe sind z. B. verstärkende und nichtverstärkende Füllstoffe, wie z. B. pyrogene oder gefällte Kieselsäuren, Ruß oder Quarzmehl. Sowohl die basischen Füllstoffe als auch die weiteren verstärkenden oder nichtverstärkenden Füllstoffe können gegebenenfalls oberflächen-modifiziert sein. Besonders bevorzugt einsetzbar sind als basische Füllstoffe B) gefällte oder gemahlene Kreiden sowie pyrogene Kieselsäuren. Bei der Komponente B) kann es sich selbstverständlich auch um Gemische von Füllstoffen handeln.

Als Komponente C) werden Umsetzungsprodukte von Aminosilanverbindungen der allgemeinen Strukturformel (II) 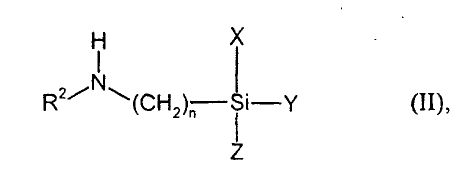 in welcher
R², X, Y, Z und n die oben angegebene Bedeutung haten,
mit Malein- oder Fumarsäure(estern) der allgemeinen Formel (III)

R₃OOC-CH=CH-COOR₃ (III)

in welcher
- R₃: für eine Alkylgruppe mit 1 bis 12 Kohlenstoffatomen steht,
eingesetzt.

Beispiele für einsetzbare Aminosilanverbindungen der Formel (II) sind 3-Aminopropyltrimethoxysilan, 3-Aminopropyltriethoxysilan, N-Aminoethyl-3-aminopropyltrimethoxysilan, N-Aminoethyl-3-aminopropyltriethoxysilan, 3-Aminopropyl-methyldiethoxysilan und N-Aminoethyl-3-aminopropylmethyldimethoxysilan.

In der Formel (III) steht R₃ für einen linearen oder verzweigten aliphatischen Kohlenwasserstoffrest mit maximal 12 Kohlenstoffatomen. Beispiele für geeignete Malein- bzw. Fumarsäureester sind Maleinsäurediethylester, Maleinsäuredimethylester, Maleinsäuredibutylester, Maleinsäuredioctylester, Fumarsäurediethylester, Fumarsäuredimethylester, Fumarsäuredioctylester.

Für den Fall, daß als Aminosilane Produkte eingesetzt werden in denen gemäß Formel (II) R₂ ein Wasserstoffatom bedeutet, entstehen bei der Umsetzung mit den Malein- bzw. Fumarsäureestern gemäß der Lehre der EP-A 596360 Asparaginsäureester der allgemeinen Strukturformel (IV) 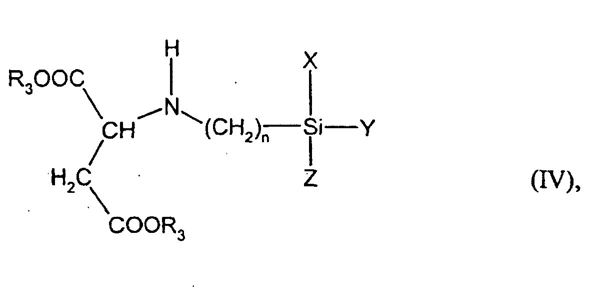 in welcher
R³, X, Y, Z und n die bei den Formeln (II) und (III) angegebene Bedeutung haben.

Für den besonders bevorzugten Fall, daß als Aminosilane der Formel (II) Produkte eingesetzt werden, in denen R₂ eine Aminoethylgruppe bedeutet, entstehen durch Cyclokondensationsreaktion Piperazinonderivate der allgemeinen Formel (V) 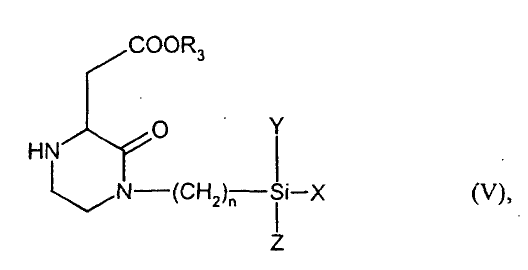 in welcher
R₃, X, Y, Z und n die bei Formel (IV) angegebene Bedeutung haben.

Als Komponente E) können alle metallorganischen Katalysatoren eingesetzt werden, die bekanntermaßen die Silanpolykondensation fördern. Dies sind insbesondere Verbindungen des Zinns und des Titans. Bevorzugte Zinnverbindungen sind beispielsweise Dibutylzinndilaurat, Dibutylzinndiacetat und Dioctylzinnmaleat, Zinn(II)octoat oder Dibutylzinn-bis-acetoacetonat. Bevorzugte Titanverbindungen sind beispielsweise Alkyltitanate, wie Tetraisopropyltitanat, Tetrabutyltitanat und chelatisierte Titanverbindungen, wie Diisobutyl-bisacetessigsäureethylester-titanat. Besonders bevorzugt wird Dibutylzinn-bis-acetoacetonat als Komponente E) eingesetzt.

Zusätze und Hilfsstoffe F) im Sinne der Erfindung seien genannt: Trockenmittel, Weichmacher, andere als die unter C) genannten Haftmittel, Thixotropiermittel, Lichtschutzmittel, Pigmente und Schutzmittel, z.B. Fungizide.

Als Trockenmittel seien insbesondere Alkoxysilylverbindungen genannt wie Vinyltrimethoxysilan, Methyltrimethoxysilan, i-Butyltrimethoxysilan, Hexadecyltrimethoxysilan. Als Weichmacher seien beispielhaft Phtalsäureester, Adipinsäureester, Alkylsulfonsäureester des Phenols oder Phosphorsäureester genannt. Als Thixotropiermittel seien beispielhaft Polyamide, hydrierte Ricinusöl-Folgeprodukte oder auch Polyvinylchlorid genannt. Als Haftvermittler können zusätzlich zu den unter C) genannten Verbindungen Aminosilane der bekannten Art, Epoxysilane und/oder Mercaptosilane eingesetzt werden.

Die erfindungsgemäßen Polyurethanmassen bestehen vorzugsweise aus 30 bis 80 Gew% an Komponente A), 10 bis 50 Gew% an Komponente B), *0,5* bis 3 Gew% an Komponente C), 0,02 bis 1 Gew% an Komponente E) sowie 0 bis 40 Gew% an Komponente F).

Gegenstand der vorliegenden Erfindung ist auch ein Verfahren zur Herstellung der erfindungsgemäßen kondensationsvernetzenden Polyurethanmassen. Beim erfindungsgemäßen Verfahrens wird die Komponente C) in einem separaten Reaktionsgefäß hergestellt, durch Umsetzung der Aminosilane mit den Malein- bzw. Fumarsäureestern analog der Lehre der EP-A 596360 im Temperaturbereich von 0 bis 100 °C. Die Komponenten A), B), E) sowie gegebenenfalls F) werden unter Ausschluß von Feuchtigkeit vermischt und anschließend mit der Komponente C) versetzt.

In einer bevorzugten Ausführungsform des erfindungsgemäßen Verfahrens wird die erfindungsgemäß einsetzbare Komponente C) in situ erzeugt. Bei dieser Verfahrensweise werden die Komponenten A), B), E) sowie gegebenenfalls F) zusammen mit den zur Herstellung der Komponente C) einsetzbaren Malein- bzw. Fumarsäureestern unter Ausschluß von Feuchtigkeit vermischt und anschließend mit den erfindungsgemäß zur Herstellung der Komponente C) einsetzbaren Aminosilanen versetzt.

Gegenstand der vorliegenden Erfindung ist auch die Verwendung der erfindungsgemäß als Komponente C) einsetzbaren Umsetzungsprodukte von Aminosilanen und Malein- und Fumarsäureestern als Additiv in kondensationsvernetzenden Polyurethanmassen.

Gegenstand der vorliegenden Erfindung ist weiterhin die Verwendung der erfindungsgemäßen kondensationsvernetzenden Polyurethanmassen als Dichtstoff, Kleboder Beschichtungsmaterial.

Die erfindungsgemäßen kondensationsvernetzenden Polyurethanmassen zeigen einerseits eine schnelle Aushärtung mit Hautbildungszeiten zwischen 15 und 120 Minuten, besitzen aber andererseits eine hervorragende Lagerstabilität im Temperaturbereich bis zu 60°C.

Die vernetzten Polymere zeigen verbesserte mechanische Eigenschaften insbesondere eine verbesserte Reißdehnung im Vergleich zu analogen Systemen, die konventionelle Aminosilane enthalten. Außerdem zeichnen sich die erfindungsgemäßen Polyurethanmassen durch hervoragende Haftung insbesondere Naßhaftung auf allen erdenklichen Substraten wie beispielsweise Metall, Keramik, Kunststoff, Stein oder Beton aus.

### Beispiele

### Herstellung eines Alkoxysilyl-Endgruppen aufweisenden Polyurethans A1)

2000 g eines Polyetherdiols der OH-Zahl 28, hergestellt durch Propoxylierung von Propylenglykol und anschließende Ethoxylierung des Propoxylierungsproduktes (PO/EO-Verhältnis = 80:20) werden mit 155,4 g Isophorondiisocyanat bei 70°C unter Zusatz von 0,02 g Dibutylzinndilaurat bis zum Erreichen des theoretischen NCO-Gehaltes von 0,78 % prepolymerisiert. Nach Abkühlen auf 60°C tropft man 140,4 g N-(3-Trimethoxysilylpropyl)asparaginsäure-diethylester (hergestellt gemäß EP-A 596 360, Bsp. 5) zügig zu und rührt, bis im IR-Spektrum keine Isocyanatbande mehr zu sehen ist. Das erhaltene Alkoxysilyl-Endgruppen aufweisende Polyurethanprepolymer hat eine Viskosität von 76000 mPas (23°C).

### Herstellung eines Alkoxysilyl-Endgruppen aufweisenden Polyurethans A2)

2000 g eines Polyetherdiols der OH-Zahl 28, hergestellt durch Propoxylierung von Propylenglykol und anschließende Ethoxylierung des Propoxylierungsproduktes (PO/EO-Verhältnis = 80:20) werden mit 155,4 g Isophorondiisocyanat bei 70°C unter Zusatz von 0,02 g Dibutylzinndilaurat bis zum Erreichen des theoretischen NCO-Gehaltes von 0,78 % prepolymerisiert. Nach Abkühlen auf 60°C tropft man 102 g N-Phenyl-3-aminopropyltrimethoxysilan zügig zu und rührt, bis im IR-Spektrum keine Isocyanatbande mehr zu sehen ist. Das erhaltene Alkoxysilyl-Endgruppen aufweisende Polyurethanprepolymer hat eine Viskosität von 86000 mPas (23°C).

### Beispiel 1

### Herstellung einer erfindungsgemäßen Polyurethanmasse

In einem handelsüblichen Planetenmischer werden die folgenden Komponenten zu einem gebrauchsfertigen Dichtstoff verarbeitet:

| | |
|---|---|
| 36,4 Gew-Teile | Polyurethan A1) |
| 12,9 Gew.-Teile | Diisoundecylphtalat (Weichmacher) |
| 0,02 Gew.-Teile | Dibutylzinn-bis-acetoacetonat (10%ig gelöst in Solvent-naphta 100) |
| 1,50 Gew.-Teile | Vinyltrimethoxysilan |
| 46,2 Gew.-Teile | Fällungskreide (Typ: Socal® U1S2) |
| 2,00 Gew.-Teile | Maleinsäurediethylester |
| 1,40 Gew.-Teile | Disparlon® NVG8403 S (Thixotropiermittel der Kusumoto Chem. Ltd.) |

Die Mischung wird 10 Minuten bei einem Druck von 100 mbar dispergiert, wobei die Innentemperatur auf 60°C ansteigt. Anschließend werden

| | |
|---|---|
| 1,5 Gew.-Teile | N-Aminoethyl-3-aminopropyl-trimethoxysilan |

zugegeben und bei einem Druck von 100 mbar durch 10 minütiges Rühren eingearbeitet. Der so hergestellte Dichtstoff zeigt eine ausgezeichnete Standfestigkeit, haftet auf nahezu allen Untergründen und härtet mit einer Hautbildungszeit von 30 Minuten aus.

Das Produkt wird in eine handelsübliche Kartusche abgefüllt und bei 50°C gelagert. Nach einer Lagerdauer von 90 Tagen läßt sich das Produkt noch problemlos verarbeiten und zeigt unveränderte Produkteigenschaften.

Die folgenden mechanischen Eigenschaften wurden bestimmt:

| | | |
|---|---|---|
| Zugfestigkeit | 2,6 N/mm² | (DIN 53504) |
| Reißdehnung | 268 % | (DIN 53504) |
| Weiterreißwiderstand | 5,4 N/mm | (DIN 53515) |
| Shore A-Härte | 42 | |

### Beispiel 2

### Herstellung einer erfindungsgemäßen Polyurethanmasse

In einem handelsüblichen Planetenmischer werden die folgenden Komponenten zu einem gebrauchsfertigen Dichtstoff verarbeitet:

| | |
|---|---|
| 36,0 Gew-Teile | Polyurethan A₂ |
| 12,6 Gew.-Teile | Diisoundecylphtalat (Weichmacher) |
| 0,02 Gew.-Teile | Dibutylzinn-bis-acetoacetonat (10%ig gelöst in Solventnaphta 100) |
| 2,20 Gew.-Teile | Vinyltrimethoxysilan |
| 45,68 Gew.-Teile | Fällungskreide (Typ: Socal® U1S2 der Fa. Solvay GmbH) |
| 2,0 Gew.- Teile | Maleinsäuredimethylester |
| 1,4 Gew.-Teile | Cabosil® TS 720 (pyrogene Kieselsäure der Fa. Cabot GmbH) |

Die Mischung wird 10 Minuten bei einem Druck von 100 mbar dispergiert, wobei die Innentemperatur auf 60°C ansteigt Anschließend werden

| | |
|---|---|
| 2,1 Gew.-Teile | N-Aminoethyl-3-aminopropyl-trimethoxysilan |

zugegeben und bei einem Druck von 100 mbar durch 10 minütiges Rühren eingearbeitet.

Der so hergestellte Dichtstoff zeigt eine ausgezeichnete Standfestigkeit, haftet auf nahezu allen Untergründen und härtet mit einer Hautbildungszeit von 40 Minuten aus.

Das Produkt wird in eine handelsübliche Kartusche abgefüllt und bei 50 °C gelagert. Nach einer Lagerdauer von 90 Tagen läßt sich das Produkt noch problemlos verarbeiten und zeigt unveränderte Produkteigenschaften.

Die folgenden mechanischen Eigenschaften wurden bestimmt:

| | | |
|---|---|---|
| Zugfestigkeit | 2,8 N/mm² | (DIN 53504) |
| Reißdehnung | 290 % | (DIN 53504) |
| Weiterreißwiderstand | 7,5 N/mm | (DIN 53515) |
| Shore A-Härte | 46 | |

### Beispiel 3

### Nicht erfindungsgemäßes Vergleichsbeispiel

Beispiel 1 wird wiederholt, mit der Änderung daß kein Maleinsäurediethylester zugesetzt wird. Das Produkt wird in eine handelsübliche Kartusche abgefüllt und bei 50°C gelagert. Nach einer Lagerdauer von 60 Tagen läßt sich das Produkt nicht mehr aus der Kartusche auspressen und ist geliert.

Die folgenden mechanischen Eigenschanen wurden bestimmt:

| | | |
|---|---|---|
| Zugfestigkeit | 2,5 N/mm² | (DIN 53504) |
| Reißdehnung | 235% | (DIN 53504) |
| Weiterreißwiderstand | 5,6 N/mm | (DIN 53515) |
| Shore A-Härte | 42 | |

### Beispiel 4

### Nicht erfindungsgemäßes Vergleichsbeispiel

Beispiel 2 wird wiederholt, mit der Änderung, daß kein Maleinsäuredimethylester zugesetzt wird. Das Produkt wird in eine handelsübliche Kartusche abgefüllt und bei 50°C gelagert. Nach einer Lagerdauer von 35 Tagen läßt sich das Produkt nicht mehr aus der Kartusche auspressen und ist geliert.

Die folgenden mechanischen Eigenschaften wurden bestimmt:

| | | |
|---|---|---|
| Zugfestigkeit | 2,8 N/mm² | (DIN 53504) |
| Reißdehnung | 250 % | (DIN 53504) |
| Weiterreißwiderstand | 7,4 N/mm | (DIN 53515) |
| Shore A-Härte | 46 | |

### Beispiel 5

### Herstellung einer erfindungsgemäßen Polyurethanmasse

In einem handelsüblichen Planetenmischer werden die folgenden Komponenten zu einem gebrauchsfertigen Dichtstoff verarbeitet:

| | |
|---|---|
| 36,4 Gew-Teile | Polyurethan A1) |
| 12,9 Gew.-Teile | Diisoundecylphtalat (Weichmacher) |
| 0,04 Gew.-Teile | Dibutylzinn-bis-acetoacetonat (10%ig gelöst in Solventnaphta 100) |
| 1,50 Gew.-Teile | Vinyltrimethoxysilan |
| 46,2 Gew.-Teile | Fällungskreide (Typ: Socal U1S2) |
| 1,40 Gew.-Teile | Disparlon NVG8403 S (Thixotropiermittel der Kusumoto Chem. Ltd.) |

Die Mischung wird 10 Minuten bei einem Druck von 100 mbar dispergiert, wobei die Innentemperatur auf 60°C ansteigt. Anschließend werden

| | |
|---|---|
| 2,5 Gew.-Teile | N-(3-Trimethoxysilylpropyl)asparaginsäure-diethylester (hergestellt gemäß EP-A 596 360, Bsp. 5) |

zugegeben und bei einem Druck von 100 mbar durch 10 minütiges Rühren eingearbeitet.

Der so hergestellte Dichtstoff zeigt eine ausgezeichnete Standfestigkeit, haftet auf nahezu allen Untergründen und härtet mit einer Hautbildungszeit von 50 Minuten aus.

Das Produkt wird in eine handelsübliche Kartusche abgefüllt und bei 50°C gelagert. Nach einer Lagerdauer von 90 Tagen läßt sich das Produkt noch problemlos verarbeiten und zeigt unveränderte Produkteigenschaften.

Die folgenden mechanischen Eigenschaften wurden bestimmt:

| | | |
|---|---|---|
| Zugfestigkeit | 2,5 N/mm² | (DIN 53504) |
| Reißdehnung | 310 % | (DIN 53504) |
| Weiterreißwiderstand | 6,1 N/mm | (DIN 53515) |
| Shore A-Härte | 39 | |

## Patentansprüche

1. Über eine Silanpolykondensation vernetzende Polyurethanmassen, enthaltend
A) mindestens ein alkoxysilanfunktionelles Polyurethan mit Endgruppen der allgemeinen Formel (I) 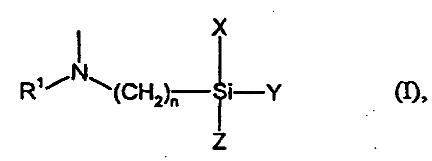 in welcher
R¹ für einen organischen Rest mit 1 bis 12 Kohlenstoffatomen,
n für eine ganze Zahl von 2 bis 4 steht
und
X,Y,Z gleiche oder verschiedene organische Reste darstellen, mit der Maßgabe, daß mindestens einer der Reste eine Alkoxygruppe mit 1 bis 4 Kohlenstoffatomen darstellt,
B) mindestens einen basischen Füllstoff,
C) mindestens ein Umsetzungsprodukt aus mindestens einem Aminosilan der allgemeinen Formel (II) 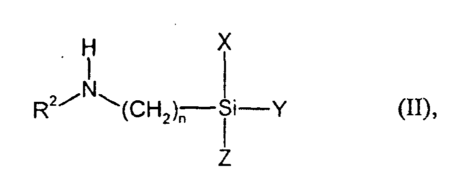 in welcher
R² für ein Wasserstoffatom, oder eine Aminoethylgruppe steht und
n, X,Y, Z die bei Formel (I)genannte Bedeutung haben,
mit mindestens einem Malein- oder Fumarsäure(ester) der allgemeinen Formel (III)
R₃OOC-CH=CH-COOR₃ (III),
in welcher
R₃ für eine Alkylgruppe mit 1 bis 12 Kohlenstoffatomen steht,
E) mindestens eine metallorganische Verbindung und
F) ggf. weitere Hilfsstoffe.

2. Über eine Silanpolykondensation vernetzende Polyurethanmassen gemäß Anspruch 1, **dadurch gekennzeichnet, daß** als Komponente A) mindestens ein Alkoxysilyl-funktionelles Polyurethan der allgemeinen Formel (I) 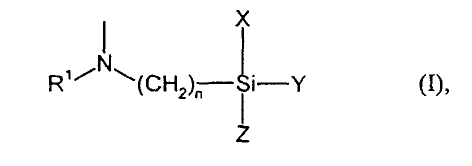 eingesetzt wird, worin X, Y, und Z jeweils für eine Methoxygruppe steht.

3. Über eine Silanpolykondensation vernetzende Polyurethanmassen gemäß Anspruch 1 und 2, **dadurch gekennzeichnet, daß** als Komponente A) mindestens ein Alkoxysilyl-funktionelles Polyurethan der allgemeinen Formel (I) 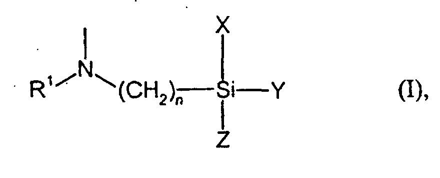 eingesetzt wird, worin R₁ für einen Rest der allgemeinen Formel (IIb) 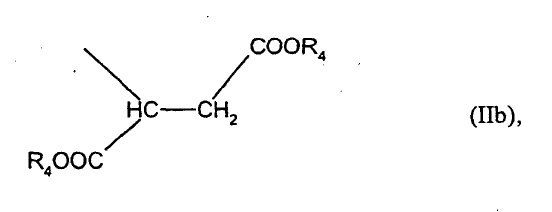 steht, wobei R₄ eine Alkylgruppe mit 1 bis 4 Kohlcnstoffatomen bedeutet.

4. Über eine Silanpolykondensation vemetzende Polyurethanmassen gemäß Anspruch 1, **dadurch gekennzeichnet, daß** als Komponente C) Aminosilanverbindungen der allgemeinen Formel (V) eingesetzt werden, 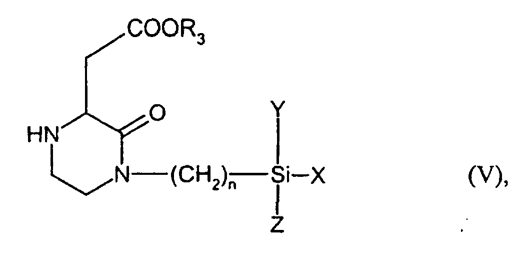 in welcher
R₃ für einen linearen oder verzweigten aliphatischen Kohlenwasserstoffrest mit maximal 12 Kohlenstoffatomen steht, n = 3 ist und X,Y, Z für Methoxy oder Ethoxyreste stehen.

5. Verfahren zur Herstellung von kondensationsvemetzenden Polyurethanmassen gemäß Anspruch 1, wonach die Komponenten A) , B), E) sowie ggf. F) unter Ausschluß von Feuchtigkeit vermischt werden und anschließend mit der Komponente C) versetzt werden.

6. Verwendung von kondensationsvernetzenden Polyurethanmassen gemäß Anspruch 1 als Dichtstoff, Kleb- oder Beschichtungsmaterial.

## Claims

1. Polyurethane compositions which crosslink by way of a silane polycondensation and comprise
A) at least one alkoxysilane-functional polyurethane containing terminal groups of the general formula (I) 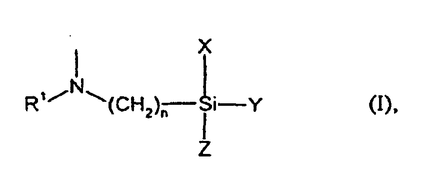 in which
R¹ is an organic radical having 1 to 12 carbon atoms,
n is an integer from 2 to 4
and
X,Y and Z are identical or different organic radicals, with the proviso that at least one of the radicals is an alkoxy group with from 1 to 4 carbon atoms,
B) at least one basic filler,
C) at least one reaction product of at least one aminosilane of the general formula (II) 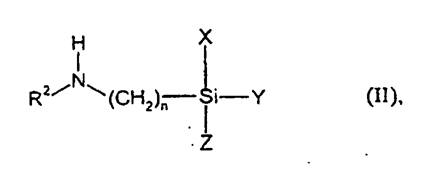 in which
R² is a hydrogen atom or an aminoethyl group and
n, X, Y and Z are as defined for formula (I),
with at least one maleic or fumaric acid (ester) of the general formula (III)
R₃OOC-CH=CH-COOR₃ (III),
in which
R₃ is an alkyl group having 1 to 12 carbon atoms,
E) at least one organometallic compound and
F) if desired, further auxiliaries.

2. Polyurethane compositions which crosslink by way of a silane polycondensation according to Claim 1, **characterized in that** used as component A) is at least one alkoxysilyl-functional polyurethane of the general formula (I) 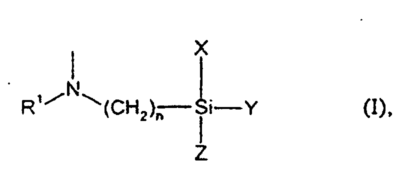 in which X, Y and Z are each a methoxy group.

3. Polyurethane compositions which crosslink by way of a silane polycondensation according to Claim 1 and 2, **characterized in that** used as component A) is at least one alkoxysilyl-functional polyurethane of the general formula (I) 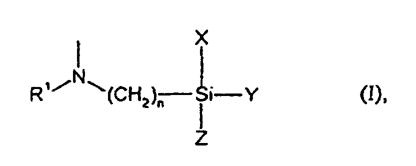 in which R₁ is a radical of the general formula (IIb) 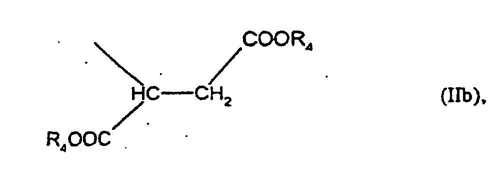 where R₄ is an alkyl group having 1 to 4 carbon atoms.

4. Polyurethane compositions which crosslink by way of a silanepolycondensation according to Claim 1, **characterized in that** used as component C) are aminosilane compounds of the general formula (V) 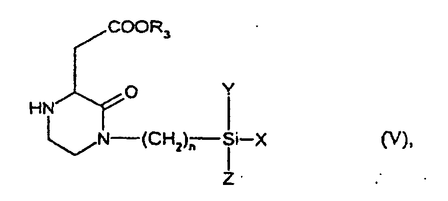 in which
R₃ is a linear or branched aliphatic hydrocarbon radical having not more than 12 carbon atoms, n is 3 and X, Y and Z are methoxy or ethoxy radicals.

5. Process for preparing condensation-crosslinking polyurethane compositions according to Claim 1, according to which components A), B), E) and, where used, F, are mixed in the absence of moisture and subsequently component C) is added to the mixture.

6. Use of condensation-crosslinking polyurethane compositions according to Claim 1 as sealant, adhesive or coating material.

## Revendications

1. Matières de polyuréthane à réticulation par polycondensation de silane contenant:
A) au moins un polyuréthane à fonction alcoxysilane avec des groupes terminaux de formule générale (I) 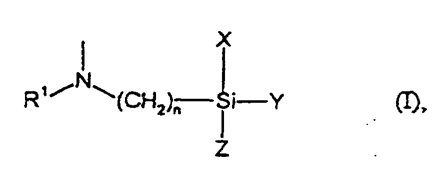 dans laquelle
R₁ désigne un radical organique avec 1 à 12 atomes de carbone,
n désigne un nombre entier de 2 à 4
et
X,Y,Z représentent des radicaux organiques identiques ou différents étant entendu qu'au moins un des radicaux représente un groupe alcoxy avec 1 à 4 atomes de carbone,
B) au moins une charge basique,
C) au moins un produit de transformation d'au moins un aminosilane de formule générale (II) 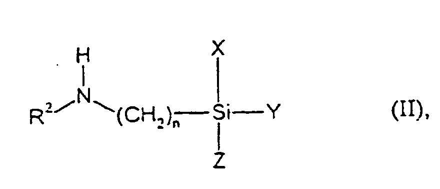 dans laquelle
R₂ désigne un atome d'hydrogène ou un groupe aminoéthyle et
n, X, Y, Z ont la signification spécifiée dans la formule (I),
avec au moins un (ester d')acide maléique ou fumarique de formule générale (III)
R₃OOC-CH=CH-COOR₃ (III),
dans laquelle
R₃ désigne un groupe alkyle avec 1 à 12 atomes de carbone,
E) au moins un composé métallorganique et
F) éventuellement d'autres adjuvants.

2. Matières de polyuréthane à réticulation par polycondensation de silane conformément à la revendication 1, **caractérisées en ce qu'**au moins un polyuréthane à fonction alcoxysilyle de formule générale (I) 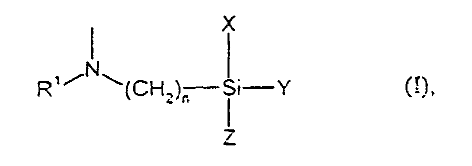 dans laquelle X, Y et X désignent respectivement un radical méthoxy est utilisé comme composant A).

3. Matières de polyuréthane à réticulation par polycondensation de silane conformément à l'une des revendications 1 ou 2, **caractérisées en ce qu'**au moins un polyuréthane à fonction alcoxysilyle de formule générale (I) 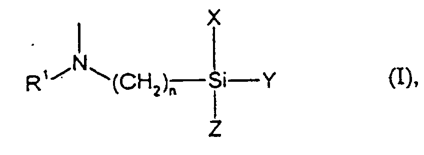 dans laquelle R₁ désigne un radical de formule générale (IIb) 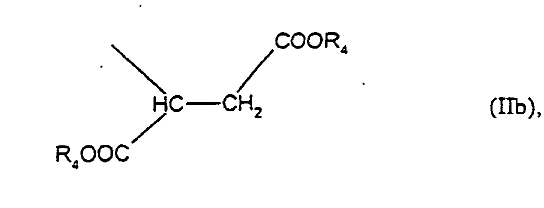 dans laquelle R₄ désigne un groupe alkyle avec 1 à 4 atomes de carbone est utilisé comme composant A).

4. Matières de polyuréthane à réticulation par polycondensation de silane conformément à la revendication 1, **caractérisées en ce que** des composés d'aminosilane de formule générale (V) 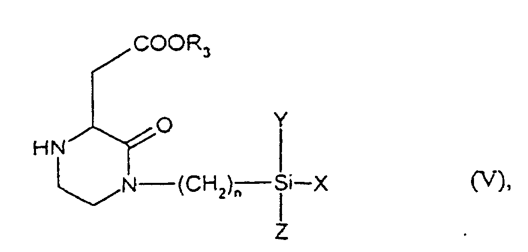 dans laquelle
R₃ désigne un radical hydrocarbure aliphatique linéaire ou ramifié avec 12 atomes de carbone maximum, n = 3 et X, Y, Z désignent des radicaux méthoxy ou éthoxy sont utilisés comme composant C).

5. Procédé de préparation de matières de polyuréthane à réticulation par condensation conformément à la revendication 1, selon lequel les composants A), B) E) et, éventuellement, F) sont mélangés sous exclusion de l'humidité et ensuite mélangés avec le composant C).

6. Mise en oeuvre de matières de polyuréthane à réticulation par condensation conformément à la revendication 1 comme matériau d'étanchéité, adhésif ou revêtement.
